# FASCICULE DE BREVET EUROPEEN

(11) **EP 2 671 442 B1**
(45) Date de publication et mention de la délivrance du brevet: **11.04.2018**
(21) Numéro de dépôt: 13170381.1
(22) Date de dépôt: 04.06.2013
(51) Int. Cl.: A01C 7/04, A01C 7/08

(54) **Semoir pneumatique comprenant des moyens d'amortissement et/ou de déviation de l'écoulement d'air extrait provenant de la turbine**
Pneumatische Sämaschine, die Dämpfungs- und/oder Umleitungsmittel für den Strom der Abluft aus der Turbine umfasst
Pneumatic seed drill comprising means for damping and/or deflecting the flow of extracted air from the turbine

(30) Priorité: 07.06.2012 FR 1255326
(43) Date de publication de la demande: 11.12.2013
(73) Titulaire: Ribouleau Monosem, 79240 Largeasse (FR)
(72) Inventeur: Bergere, Caroline, 79300 BRESSUIRE (FR)
(74) Mandataire: Vidon Brevets & Stratégie

(56) Documents cités:
- EP-A1- 2 147 588
- DE-A1-102005 024 739

## Description

### 1. Domaine de l'invention

Le domaine de l'invention est celui de la conception et de la fabrication d'équipements agricoles destinés à assurer la distribution de graines sur des surfaces cultivables.

L'invention concerne plus particulièrement de tels équipements qui comprennent des moyens de distribution pneumatique de graines.

### 2. Art antérieur

Les agriculteurs utilisent classiquement des équipements agricoles pour ensemencer leurs surfaces cultivables. Au rang de ces équipements figurent les semoirs qui permettent de distribuer des graines.

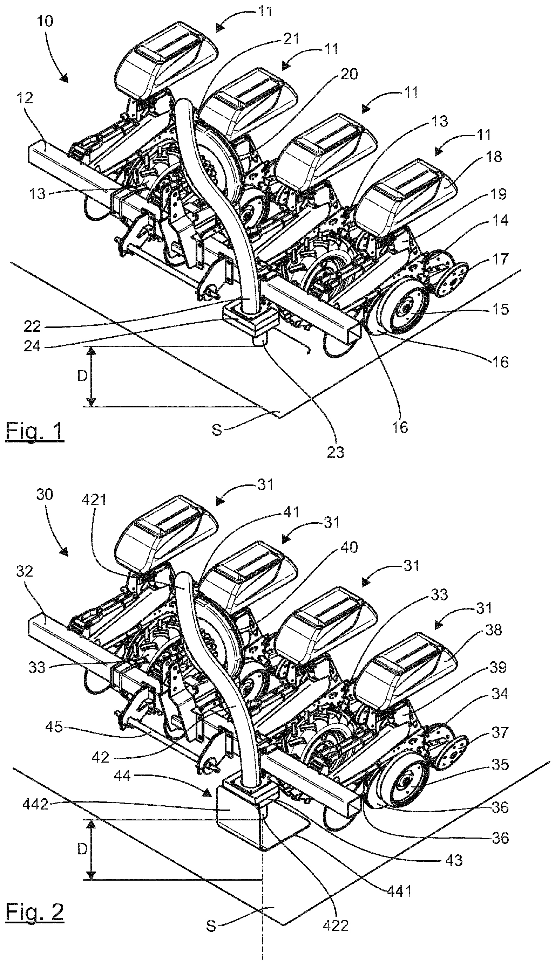

Ainsi que cela est représenté à la figure 1, un semoir 10 comprend généralement plusieurs éléments semeurs 11. Ces éléments semeurs 11 sont solidarisés côte-à-côte à un châssis 12, reposant sur le sol au moyen de roues 13, et destiné à être solidarisé derrière un tracteur.

Chaque élément semeur 11 comprend un bâti 14 qui repose sur le sol au moyen d'une paire de roues de jauge 15 entre lesquelles est placée une paire de disques creuseurs 16. Un bloc arrière 17, comprenant deux roues inclinées, est solidarisé à l'arrière du bâti 14. Chaque élément semeur 11 comprend également des moyens de stockage de graines, comme par exemple un réservoir 18, dont la sortie communique avec des moyens de distribution de graines 19.

Les moyens de distribution de graines 19 peuvent être de type pneumatique. La présente invention concerne plus particulièrement les semoirs comprenant des moyens de distribution pneumatique, encore appelés semoirs pneumatiques.

Les moyens de distribution pneumatique 19 comprennent classiquement un boitier à l'intérieur duquel un disque est monté mobile en rotation. Ce disque est traversé par des perforations ménagées sensiblement à sa périphérie le long d'un même cercle. Il délimite à l'intérieur du boitier deux compartiments. L'un de ces compartiments communique avec la sortie du réservoir 18 et un canal de distribution de graines qui débouche entre les disques creuseurs 16. L'autre compartiment communique au moyen d'un tuyau avec une entrée d'une turbine aspirante 20 solidaire du châssis 12.

La turbine 20 comprend plusieurs entrées qui peuvent chacune être reliée aux moyens de distribution pneumatiques de différents éléments semeurs 11 d'un même semoir 10. La turbine 20 comprend une sortie d'évacuation d'air 21 orientée vers le haut, en d'autres termes sensiblement vers le ciel lorsque le semoir repose sur ses roues 13.

Lorsque le semoir 10 est déplacé sur une surface cultivable, par exemple au moyen d'un tracteur à l'arrière duquel il est solidarisé, les disques creuseurs 16 y creusent un sillon dont la profondeur dépend de la position des roues de jauge 15. En parallèle, la turbine aspirante 20, qui est par exemple reliée à la prise de force du tracteur ou à un moteur par exemple hydraulique, est mise en oeuvre de façon à générer une dépression à l'intérieur des compartiments délimités dans le boitier par le disque perforé. Les graines contenues dans le réservoir 18 sont alors aspirées et viennent se loger devant les perforations prévues à cet effet sur le disque perforé, dont la taille est inférieure à celle des graines. Un sélecteur permet de s'assurer qu'une seule graine soit placée dans chaque perforation. Le disque perforé tourne à l'intérieur du boitier qui comprend une zone non soumise à dépression. Chaque fois qu'une perforation du disque se trouve dans cette zone, la graine correspondante n'est plus plaquée contre le disque et s'écoule dans le canal de distribution jusqu'à venir se loger dans le sillon préalablement creusé par les disques creuseurs 16. Les graines y sont ainsi déposées à l'unité. Alors que le semoir 10 continu de se déplacer sur le sol, le bloc arrière 17 referme le sillon après que les graines y ont été déposées.

L'élément semeur décrit précédemment repose sur le sol au moyen de roues de jauge. Toutefois, l'invention s'applique également à tout autre type d'élément semeur monograine, c'est-à-dire déposant les graines à l'unité, comme par exemple les éléments semeurs à socs.

L'air aspiré dans les moyens de distribution pneumatiques par la turbine 20 afin d'y générer une dépression est extrait de la turbine 20 via l'évacuation 21.

Cet air peut être chargé de particules de produits chimiques qui recouvrent les graines comme par exemple des insecticides qui se détachent par abrasion.

Des études ont montrées que ces particules, du fait de la vitesse à laquelle l'air est expulsé depuis l'évacuation 21 de la turbine 20, et parfois sous l'effet du vent, peuvent se propager dans l'atmosphère à plusieurs dizaines voir centaines de mètres de l'évacuation 21 de la turbine 20.

Ces particules peuvent être nocives pour la faune et la flore, ainsi que pour les agriculteurs procédant à l'ensemencement de surfaces cultivables.

Des normes, notamment en vigueur en Europe, ont donc été établies dans le but de limiter la propagation dans l'atmosphère de ces particules et de contenir leur effet sur l'environnement. Ces normes (notamment l'Arrêté français du 13 avril 2010 modifiant l'arrêté du 13 janvier 2009 relatif aux conditions d'enrobage et d'utilisation des semences traitées par des produits mentionnés à l'article L. 253-1 du code rural en vue de limiter l'émission des poussières lors du procédé de traitement en usine) imposent en particulier d'expulser l'air provenant de l'évacuation 21 de la turbine 20 à une distance comprise entre vingt et trente centimètres du sol.

Le document DE-A1-10 2005 024739 prévoit d'expulser l'air provenant de la turbine à travers des orifices ménagés dans une poutre à distance du sol ou de canalisations d'échappement débouchant à proximité du sol.

Pour répondre à ces exigences normatives, la Demanderesse a mis au point une solution technique qui consiste à raccorder la sortie ou évacuation 21 de la turbine 20 à une conduite 22 dont la sortie 23 débouche en regard du sol S à une distance D comprise entre 20 et 30 centimètres de sa surface. La sortie 23 est donc orientée en direction de la surface du sol S. Une boite de décompression 24 est généralement placée en amont de la sortie 23 afin de réduire la vitesse de l'air expulsé.

Cette solution présente l'avantage de réduire la propagation de particules nocives dans l'atmosphère dans des proportions telles que les contraintes normatives en matière d'extraction de l'air des turbines des semoirs pneumatiques notamment en vigueur en Europe sont respectées. Elle peut toutefois encore être améliorée.

### 3. Inconvénients de l'art antérieur

Le roulement du tracteur et du semoir sur le sol et le travail du sol s'accompagnent d'une levée de poussière autour de l'ensemble tracteur-semoir. L'expulsion à proximité du sol et en direction de sa surface de l'air provenant de la turbine participe à amplifier cette levée de poussière.

Cette levée de poussière est toutefois préjudiciable au bon fonctionnement du semoir. Elle peut en effet s'introduire dans les différents composants du semoir, comme ses moyens de distribution, ses moyens de liaison au sol, c'est-à-dire les éléments par l'intermédiaire desquels il repose sur le sol, ses équipements de contrôle (comme par exemple un contrôleur de semis ayant des cellules photoélectriques), et affecter leur état de fonctionnement, notamment celui des chaines, des parties coulissantes, des capteurs de comptage de graines. En outre, la poussière formée autour du tracteur peut être si dense qu'elle induit une gêne visuelle chez son conducteur. Cette gêne peut être telle qu'elle soit de nature à empêcher le conducteur de suivre convenablement la trace des rayonneurs mis en oeuvre pour réaliser des passages parallèles et réguliers du tracteur. L'ensemencement n'est alors pas réalisé de manière précise.

### 4. Objectifs de l'invention

L'invention a notamment pour objectif de pallier ces inconvénients de l'art antérieur.

Plus précisément, un objectif de l'invention est de fournir, dans au moins un mode de réalisation, une technique permettant de limiter la propagation dans l'atmosphère des particules potentiellement nocives dont est chargé l'air expulsé par la turbine d'un semoir pneumatique.

Un autre objectif de l'invention est de mettre en oeuvre une telle technique qui permette, dans au moins un mode de réalisation, de limiter la levée de poussière autour d'un semoir lors d'une opération d'ensemencement.

L'invention a encore pour objectif de procurer une telle technique qui soit, dans au moins un mode de réalisation, simple de conception et à mettre en oeuvre et/ou robuste et/ou bon marché.

### 5. Exposé de l'invention

Ces objectifs, ainsi que d'autres qui apparaîtront par la suite, sont atteints à l'aide d'un semoir pneumatique destiné à être solidarisé à un engin agricole, ledit semoir comprenant des moyens de liaison au sol, des moyens de stockage d'un produit à semer, des moyens de distribution pneumatique dudit produit, une turbine comprenant au moins une entrée d'air reliée auxdits moyens de distribution et au moins une évacuation d'air, des moyens d'extraction d'air reliés à ladite évacuation, l'extrémité desdits moyens d'extraction d'air débouchant en regard du sol.

Selon l'invention, un tel semoir comprend des moyens d'amortissement et/ou de déviation de l'écoulement d'air provenant desdits moyens d'extraction, lesdits moyens d'amortissement et/ou de déviation étant placés en aval de l'extrémité desdits moyens d'extraction d'air, c'est-à-dire entre l'extrémité desdits moyens d'extraction d'air et le sol.

Ainsi, l'invention repose sur une approche tout à fait originale qui consiste à prévoir la mise en oeuvre de moyens pour amortir et/ou dévier l'écoulement d'air extrait de la turbine d'un semoir pneumatique avant qu'il ne rencontre le sol.

L'écoulement d'air s'échappant de la turbine rencontre sur sa trajectoire les moyens d'amortissement et/ou de déviation à sa sortie des moyens d'extraction. Cet écoulement est amorti, et/ou éclaté et/ou sa vitesse est réduite et/ou sa trajectoire est déviée. L'énergie cinétique de cet écoulement d'air est alors au moins en partie absorbée par les moyens d'amortissement et/ou de déviation avant qu'il ne rencontre le sol. On évite ainsi, ou à tout le moins on limite, la levée de poussière autour du semoir, ainsi que les inconvénients qui y sont inhérents.

Les moyens d'amortissement et/ou de déviation peuvent comprendre au moins un élément formant un obstacle entre l'extrémité des moyens d'extraction et la surface du sol. A sa sortie des moyens d'extraction, l'air provenant de la turbine rencontre sur sa trajectoire l'élément formant obstacle au contact duquel son flux est ralenti et/ou éclaté et/ou dévié et/ou amorti. Le ou les éléments formant obstacle pourront être réalisés dans un matériau rigide et préférentiellement dans un matériau souple pour améliorer l'effet d'amortissement du flux d'air.

Selon un mode de réalisation avantageux, lesdits moyens d'amortissement et/ou de déviation comprennent une première paroi s'étendant essentiellement parallèlement au sol en aval de ladite extrémité.

L'écoulement d'air provenant de l'extrémité des moyens d'extraction rencontre cette paroi au contact duquel il est au moins en partie amorti, et/ou éclaté et/ou sa vitesse est réduite et/ou sa trajectoire est déviée avantageusement non directement vers le sol, c'est-à-dire non perpendiculairement au sol, mais de manière inclinée préférentiellement essentiellement parallèlement à sa surface et/ou vers le haut, c'est-à-dire selon des sens opposés au sol. On évite ainsi, ou à tout le moins on limite la levée de poussière autour du semoir.

Selon cette variante, le semoir comprend préférentiellement un élément ayant une section essentiellement en forme de « L », ladite première paroi étant constituée par une des ailes dudit élément.

Cette structure mécanique d'architecture simple peut permettre de limiter voir de supprimer la levée de poussière à la fois autour du semoir et du tracteur en particulier lorsque l'aile du « L » non sensiblement parallèle à la surface du sol mais au contraire sensiblement perpendiculaire à celle-ci s'étend du côté avant du semoir, c'est-à-dire vers le sens d'avancement. Cette portion agit dans ce cas comme une barrière contre laquelle se heurte l'écoulement d'air prévenant son déplacement, au moins en grande partie, vers le véhicule assurant la mise en mouvement du semoir.

De manière avantageuse, lesdits moyens d'amortissement et/ou de déviation comprennent une bavette ayant une portion ou une paroi qui est destinée à reposer au moins en partie sur la surface du sol S.

Selon un autre mode de réalisation avantageux, ladite bavette comprend une portion inférieure destinée à venir au moins en partie au contact du sol S et une portion supérieure, lesdites portions supérieure et inférieure étant distantes l'une de l'autre pour définir au moins un espace intérieur creux.

La bavette constitue ainsi une sorte de coussin amortisseur qui permet d'améliorer encore d'avantage l'amortissement de l'écoulement d'air en sortie des moyens d'extraction. De ce fait, on réduit encore d'avantage la formation d'un nuage de poussière autour du semoir.

Selon une variante avantageuse, la bavette comprend une première extrémité qui est solidarisée dans la région de l'extrémité de la conduite du côté orienté vers le sens d'avancement du semoir.

Cette première extrémité de la bavette agit alors comme une barrière qui évite, ou limite à tout le moins fortement, l'écoulement d'air en direction de l'avant du semoir, c'est-à-dire vers l'engin qui assure le déplacement de celui-ci. Cette structure mécanique d'architecture simple peut alors permettre de limiter voir de supprimer la levée de poussière à la fois autour du semoir et autour du tracteur.

Selon une autre variante avantageuse, lesdites portions inférieure et supérieure de la bavette sont préférentiellement maintenues distantes l'une de l'autre au moyen d'au moins une entretoise.

Cette solution permet de former au moins un espace intérieur creux de manière simple et économique entre les portions supérieure et inférieure de la bavette. Ces entretoises peuvent également constituer des guide-flux pour dévier l'écoulement d'air selon des directions privilégiées par exemple latéralement ou vers l'arrière du semoir (par rapport au sens d'avancement).

La ou lesdites entretoises s'étendront préférentiellement selon des axes essentiellement perpendiculaires à l'axe de déplacement du semoir sur ledit sol S et essentiellement parallèlement à la surface du sol S.

Elles agiront alors comme des guides-flux pour dévier l'écoulement d'air latéralement de part et d'autre de la bavette. Ceci participe à limiter encore d'avantage l'écoulement du flux d'air en direction de l'engin assurant le déplacement du semoir et à éviter ainsi la formation d'un nuage de poussière autour de celui-ci.

Lesdits moyens d'amortissement et/ou de déviation sont préférentiellement réalisés au moins en partie dans un matériau souple.

L'utilisation d'un matériau présentant une certaine souplesse permet de conférer aux moyens d'amortissement et/ou de déviation de bonnes propriétés d'amortissement de l'écoulement d'air qui vient à son contact.

Ledit matériau souple appartient par exemple au groupe comprenant :
- les élastomères ;
- les mousses ;
- les matériaux tissés ou non tissés comme par exemple les toiles, les feuilles de cuir...

Selon un autre mode de réalisation avantageux, lesdits moyens d'amortissement et/ou de déviation comprennent une superposition d'une pluralité de tamis s'étendant essentiellement parallèlement au sol en aval de ladite extrémité.

Il est ainsi possible d'amortir efficacement l'écoulement d'air provenant des moyens d'extraction et/ou d'au moins une partie de cet écoulement rebondissant sur le sol.

Dans ce cas, le maillage desdits tamis décroit préférentiellement depuis le tamis le plus proche de ladite extrémité jusqu'au tamis le plus proche dudit sol.

Il est ainsi possible d'amortir l'écoulement d'air dans une telle mesure que sa vitesse au moment où il rencontre la surface du sol peut être nulle ou tout le moins très faible, ce qui permet de limiter fortement la levée de poussière.

Selon une autre variante avantageuse, le maillage desdits tamis croit depuis le tamis le plus proche de ladite extrémité jusqu'au tamis le plus proche dudit sol.

Ainsi, l'écoulement d'air extrait depuis l'extrémité des moyens d'extraction a davantage de difficulté à se propager vers le haut après avoir rebondi sur le sol. Il croise en effet sur sa trajectoire les tamis au contact desquels il est ralenti. On réduit ainsi la levée de poussière.

L'extrémité desdits moyens d'extraction débouche préférentiellement à une distance D du sol est comprise entre 20 et 30 centimètres.

La levée de poussière peut ainsi être réduite dans des proportions telle que la technique selon l'invention satisfait les normes en matière d'évacuation de l'air extrait des turbines des semoirs pneumatiques en vigueur à la date de dépôt notamment en France.

La présente invention concerne également des moyens d'amortissement et/ou de déviation pour semoir selon l'une quelconque des variantes mentionnées plus haut, ledit dispositif comprenant des moyens d'amortissement et/ou de déviation de l'écoulement d'air provenant desdits moyens d'extraction, lesdits moyens d'amortissement et/ou de déviation étant destinés à être placés en aval de l'extrémité desdits moyens d'extraction d'air.

La présente invention concerne également un engin agricole équipé d'un tel semoir.**6.**

### Liste des figures

D'autres caractéristiques et avantages de l'invention apparaîtront plus clairement à la lecture de la description suivante de modes de réalisation préférentiels, donnés à titre de simples exemples illustratifs et non limitatifs, et des dessins annexés, parmi lesquels :
- la figure 1 illustre une vue de face en perspective d'un semoir pneumatique selon l'art antérieur ;
- la figure 2 illustre une vue de face en perspective d'un semoir pneumatique selon un premier mode de réalisation de l'invention ;
- les figures 3 et 4 illustrent respectivement une vue de face en perspective et une vue de côté détaillant les moyens d'amortissement et/ou de déviation du semoir représenté à la figure 2 ;
- la figure 5 illustre l'écoulement dévié de l'air extrait de la turbine d'un semoir pneumatique illustré aux figures 2, 3 et 4 ne mettant pas en oeuvre de boîtier de décompression en amont de l'extrémité des moyens d'extraction ;
- la figure 6 illustre l'écoulement dévié de l'air extrait de la turbine du semoir pneumatique illustré aux figures 2, 3 et 4 ;
- la figure 7 illustre une vue de côté détaillant les moyens d'amortissement et/ou de déviation selon un deuxième mode de réalisation ;
- la figure 8 illustre une vue de dessous en perspective d'une variante du mode de réalisation de la figure 7 ;
- la figure 9 illustre l'écoulement dévié de l'air de la turbine du semoir selon le deuxième mode de réalisation ;
- la figure 10 illustre une variante du deuxième mode de réalisation.

### 7. Description de modes de réalisation de l'invention

### 7.1. Rappel du principe général de l'invention

Le principe général de l'invention consiste à mettre en oeuvre en aval de l'extrémité des moyens d'extraction des moyens pour amortir et/ou dévier l'écoulement d'air extrait de la turbine d'un semoir pneumatique avant qu'il ne rencontre le sol.

L'écoulement d'air s'échappant de la turbine est alors amorti et/ou dévié et/ou éclaté et/ou ralenti à sa sortie des moyens d'extraction avant de rencontrer le sol. L'énergie cinétique de l'écoulement d'air est alors au moins en partie absorbée avant qu'il ne rencontre le sol. On évite ainsi, ou à tout le moins on limite, la levée de poussière autour du semoir, ainsi que les inconvénients qui y sont inhérents.

### 7.2. Exemple d'un premier mode de réalisation d'un semoir selon l'invention

### 7.2.1. Architecture

On présente, en relation avec les figures 2 à 4, un mode de réalisation d'un semoir pneumatique selon l'invention.

Ainsi que cela est représenté sur la figure 2, un tel semoir 30 comprend plusieurs éléments semeurs 31, en l'occurrence quatre. Dans des variantes, le nombre d'éléments semeurs 31 pourra être supérieur ou inférieur à quatre. Ces éléments semeurs 31 sont solidarisés côte-à-côte à un châssis 32. Ce châssis 32 repose sur le sol au moyen de roues 33, et est destiné à être solidarisé à un engin agricole comme un tracteur (non représenté) via des moyens de solidarisation 45 prévus à cet effet.

Chaque élément semeur 31 comprend un bâti 34 qui repose sur le sol au moyen d'une paire de roues de jauge 35 entre lesquelles est placée une paire de disques creuseurs 36. Un bloc arrière 37, comprenant deux roues inclinées, est solidarisé à l'arrière du bâti 34. Chaque élément semeur 31 comprend également des moyens de stockage de graines, comme par exemple un réservoir 38, dont la sortie communique avec des moyens de distribution de graines 39.

Les moyens de distribution de graines 39 sont de type pneumatique tels que ceux qui sont commercialisés par la Demanderesse. Ils comprennent classiquement un boitier à l'intérieur duquel un disque est monté mobile en rotation. Ce disque est traversé par des perforations ménagées sensiblement à sa périphérie le long d'un même cercle. Il délimite à l'intérieur du boitier deux compartiments. L'un de ces compartiments communique avec la sortie du réservoir 38 et un canal de distribution de graines qui débouche entre les disques creuseurs 36. L'autre compartiment communique au moyen d'un tuyau avec une entrée d'une turbine aspirante 40 solidaire du châssis 32.

La turbine 40 comprend plusieurs entrées qui peuvent chacune être reliée aux moyens de distribution pneumatiques 39 des différents éléments semeurs 31 du semoir 30. La turbine 40 comprend une sortie d'évacuation d'air 41 orientée vers le haut, en d'autres termes sensiblement vers le ciel lorsque le semoir 30 repose sur le sol.

Le semoir 30 comprend des moyens d'extraction de l'air provenant de la turbine 40. Ces moyens d'extraction comprennent une conduite 42 dont l'entrée 421 est reliée à l'évacuation 41 de la turbine 40. La sortie 422 de la conduite 42 débouche en regard du sol S à une distance D comprise entre vingt et trente centimètres de la surface de celui-ci. Elle s'étend donc selon un axe essentiellement perpendiculaire à la surface du sol S, et débouche à proximité de celle-ci.

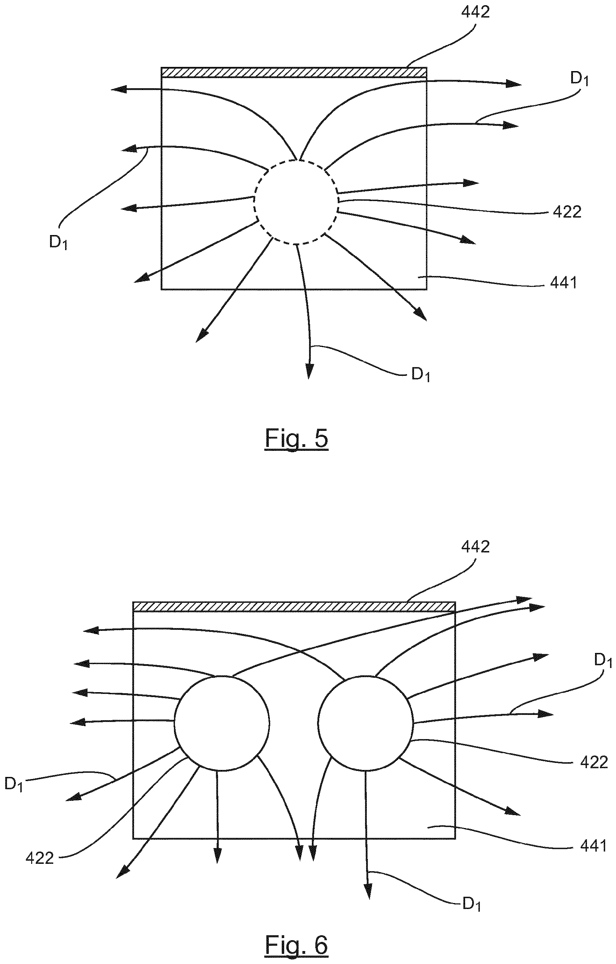

Un boîtier de décompression 43 optionnel est dans ce mode de réalisation placé sur la conduite 42 en amont de la sortie 422. Dans ce cas, la sortie 422 est une double sortie, comme cela est plus clairement représenté sur la figure 6.

Le semoir 30 comprend des moyens d'amortissement et/ou de déviation de l'écoulement d'air extrait de la turbine 40 via la conduite 42.

Dans ce mode de réalisation, ces moyens d'amortissement et/ou de déviation comprennent un déflecteur 44. Ce déflecteur 44 comprend une première paroi 441 qui s'étend essentiellement horizontalement, c'est-à-dire essentiellement parallèlement à la surface du sol S. Il comprend également une deuxième paroi 442 qui s'étend essentiellement perpendiculairement à la première paroi 441. Le déflecteur 44 présente donc une section essentiellement en forme de « L », une aile constituant la première paroi 441, l'autre constituant la deuxième paroi 442. La deuxième paroi 442 s'étend du côté du tracteur auquel le semoir 30 doit être solidarisé. La première paroi 441 constitue ici un élément formant obstacle en aval de l'extrémité ou sortie 422, en d'autres termes entre la sortie 422 et la surface du sol.

Le déflecteur 44 pourra par exemple être réalisé en caoutchouc, en plastique, en matériau tissé ou non (faisceau de fibres longues en plastiques), ou tout autre matériau sensiblement souple adapté.

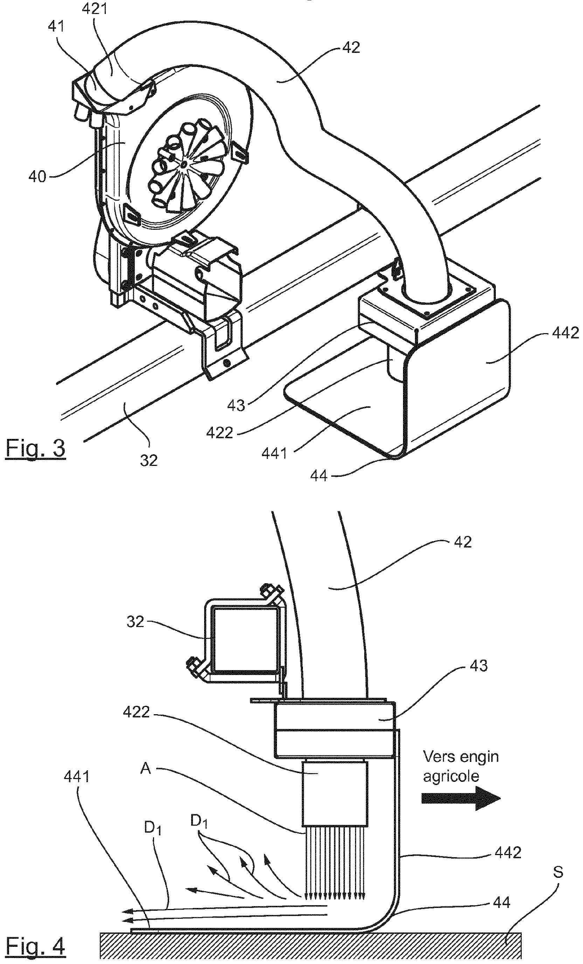

Les dimensions du déflecteur 44 seront préférentiellement choisies de manière telle qu'il vienne en contact avec la surface du sol S, comme cela est représenté sur la figure 4. Dans ce cas, il présentera préférentiellement une certaine souplesse. Il constitue alors une sorte de bavette souple qui frotte le long de la surface du sol.

Le déflecteur 44 est solidaire du boitier de décompression 43. Dans des variantes, il pourra par exemple être solidaire du châssis 32.

Comme il sera expliqué ultérieurement, le déflecteur 44 permet d'amortir et/ou de dévier et/ou de ralentir et/ou d'éclater l'écoulement d'air extrait de la turbine 40 via la conduite 42 après qu'il a passé l'extrémité 422, encore appelée sortie, des moyens d'extraction et avant qu'il ne rencontre le sol.

### 7.2.2. Variantes

Dans des variantes, la turbines 40 pourra comprendre plusieurs évacuations 41 chacune reliées à des moyens d'extraction pourvus de moyens d'amortissement et/ou de déviation selon l'invention.

### 7.2.3. Fonctionnement

Lorsque la turbine 40 est mise en oeuvre de façon à assurer la distribution de graines via les moyens de distribution 39, l'air A qui en est extrait via l'évacuation 41 s'écoule dans la conduite 42, puis s'en échappe depuis la sortie 422. Cet écoulement d'air vient alors au contact des parois 441, 442 du déflecteur 44 contre lesquelles il est au moins en partie amorti et/ou dévié et/ou éclaté et/ou ralenti, c'est-à-dire que son énergie cinétique est au moins en partie absorbée par le déflecteur. La vitesse de l'écoulement d'air est ainsi réduite. Dans ce mode de réalisation, l'écoulement d'air est également en partie dévié selon le faisceau de directions D1 essentiellement parallèles à la surface du sol S et/ou inclinées selon un sens opposé à la surface du sol, comme cela est illustré schématiquement aux figures 4 à 6. Plus généralement, les moyens d'amortissement et/ou de déviation peuvent permettre de dévier l'écoulement d'air provenant de la sortie des moyens d'extraction selon au moins une direction non directement orientée vers la surface du sol S, en d'autres termes selon une direction non perpendiculaire à la surface du sol S, c'est-à-dire au moins en partie inclinée par rapport au sol, avantageusement vers le haut, et préférentiellement essentiellement parallèlement à la surface du sol.

Lorsqu'un boitier de décompression 43 n'est pas placé en amont de l'extrémité 422 des moyens d'extraction, l'écoulement d'air peut être tel que celui illustré à la figure 5.

### 7.3. Exemple d'un deuxième mode de réalisation d'un semoir selon l'invention

### 7.3.1. Architecture

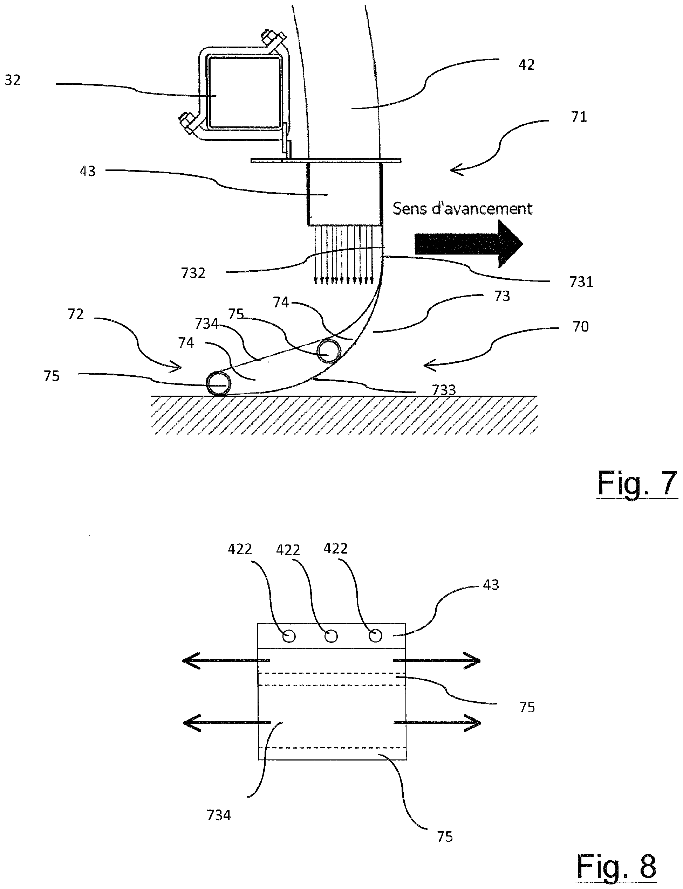

On présente, en relation avec les figures 7 à 9, un deuxième mode de réalisation d'un semoir selon l'invention. Sur ces figures 7 à 9, seuls les moyens d'amortissement et/ou de déviation de l'écoulement d'air extrait de la turbine 40 sont représentés. La description de ce deuxième mode de réalisation se limitera donc à celle de ces moyens d'amortissement et/ou de déviation, le semoir selon ce deuxième mode de réalisation étant par ailleurs identique à celui selon le premier mode de réalisation et ses variantes.

Ainsi que cela est représenté sur la figure 7, les moyens d'amortissement et/ou de déviation comprennent dans ce mode de réalisation une bavette 70.

Cette bavette 70 comprend une première extrémité 71 qui est destinée à être solidarisé à proximité de la sortie de la conduite 42 et notamment dans la région sa sortie 422. Cette première extrémité 71 est ici solidarisée une paroi du boîtier de décompression 43. Elle pourra être solidarisée à un autre endroit du semoir. La bavette 70 comprend une deuxième extrémité 72 qui est destinée à reposer au moins en partie sur le sol S.

La bavette 70 comprend une feuille 73 dont deux extrémités libres opposées 731, 732 sont solidarisées l'une à l'autre de façon à délimiter un espace intérieur creux 74. Dans ce mode de réalisation, ses deux extrémités libres 731, 732 sont solidarisées l'une à l'autre au niveau de la première extrémité 71 de la bavette 70. Dans des variantes, elles pourront être solidarisées l'une à l'autre à un autre endroit de la bavette 70.

Les deux autres extrémités libres de la bavette 70 ne sont pas reliées en sorte que l'espace intérieur creux 74 et ouvert et non pas fermé latéralement, c'est-à-dire de part et d'autre de la bavette 70 par rapport à l'axe d'avancement du semoir. Dans des variantes, ces deux autres extrémités opposées pourront également être solidarisées entre-elles. L'espace intérieur creux 74 sera alors un espace fermé. Il pourra présenter un ou plusieurs orifices d'évacuation d'air intérieur dont le nombre et/ou la taille seront déterminés pour ajuster le niveau d'amortissement conféré par la bavette 70.

Dans des variantes, la bavette 70 pourra comprendre deux feuilles solidarisées deux-à-deux à deux de leurs extrémités opposées (espace intérieur ouvert) ou le cas échéant à quatre (espace intérieur fermé).

La bavette 70 comprend ainsi une portion de feuille inférieure 733 tournée vers le sol S et destinée à venir au moins en partie en contact avec le sol S, et une portion de feuille supérieure 734 sur laquelle l'écoulement d'air en provenance des moyens d'extraction est destiné à s'écouler, ces portions de feuille inférieure 733 et supérieure 734 étant maintenue au moins en partie distante l'une de l'autre de manière à ménager entre-elles l'espace intérieur creux 74. Des entretoises 75 sont pour cela placées entres les portions de feuille inférieure 733 et supérieure 734.

Ces entretoises 75 s'étendent essentiellement perpendiculairement au sens d'avancement du semoir, et essentiellement parallèlement au sol S. Chaque entretoise 75 comprend ici un tube par exemple en matière plastique qui pourra être rigide ou présenter une certaine élasticité. Ces entretoises 75 sont ici au nombre de deux. Dans des variantes, leur nombre pourra être supérieur notamment selon la taille de la bavette 70. Selon le nombre d'entretoises mises en oeuvre, l'espace intérieur creux 74 pourra comprendre plusieurs espaces intérieurs creux 74 comme cela est notamment représenté sur la figure 7. Comme il sera décrit plus en détail par la suite, les entretoises 75 assurent également ici une fonction de guide flux.

La feuille 73 de la bavette 70 est réalisée dans un matériau souple. Il pourra par exemple s'agir d'un matériau plastique de type élastomère comme du caoutchouc naturel ou synthétique, ou autre. Il pourra également s'agir d'un matériau de type textile.

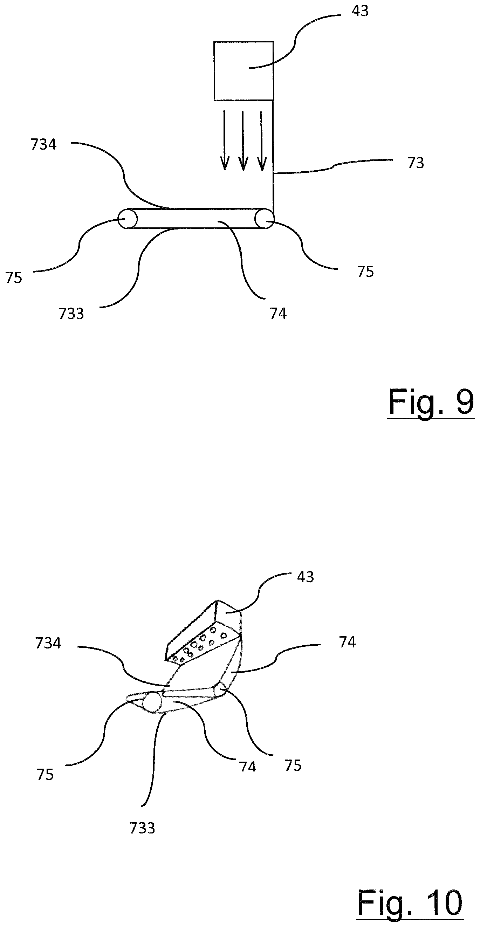

La première extrémité 71 de la bavette 70 s'étend essentiellement perpendiculairement à la surface du sol S. Le reste de la bavette 70 s'étend sensiblement en formant un arc de cercle qui repose sur le sol dans une zone proche de la deuxième extrémité 72. Dans des variantes, cette forme pourra être différente. Elle pourra par exemple présenter une forme sensiblement en « L » la portion du « L » sensiblement parallèle au sol définissant un espace intérieur creux (cf. figure 10). La première extrémité 71 de la bavette 70 est solidarisée dans la région de la sortie 422 de la conduite 42 du côté orienté vers le véhicule auquel est solidarisé le semoir, en d'autre terme du côté orienté vers le sens d'avancement.

Dans le mode de réalisation illustré à la figure 8, le boitier de décompression 43 placé à la sortie de la conduite 42 comprend plusieurs extrémités 422 servant de sortie d'air. Dans des variantes, le boîtier de décompression pourra ne comprendre qu'une seule sortie, comme cela est par exemple le cas de celui qui est illustré à la figure 5. Dans d'autres variantes, il sera possible de ne mettre en oeuvre aucun boitier de décompression.

### 7.3.2. Fonctionnement

Lorsque la turbine 40 est mise en oeuvre de façon à assurer la distribution de graines via les moyens de distribution 39, l'air A qui en est extrait via l'évacuation 41 s'écoule dans la conduite 42, puis s'en échappe depuis la ou les sorties 422. Cet écoulement d'air vient alors au contact de la portion de feuille supérieure 734 de la bavette 70 contre lesquelles il est au moins en partie amorti et/ou dévié et/ou éclaté et/ou ralenti, c'est-à-dire que son énergie cinétique est au moins en partie absorbée par le déflecteur. La vitesse de l'écoulement d'air est ainsi réduite.

Compte tenu du fait que la bavette 70 est souple et définit un espace intérieur creux 74, elle constitue en quelque sorte un coussin d'amortissement contre lequel l'écoulement d'air est amorti. Le fait que la portion inférieure 733 en arc de cercle de la bavette 70 se trouve en contact avec le sol essentiellement au niveau de la deuxième extrémité 72 de la bavette, permet de garantir qu'un espace existe entre le sol et une portion de la bavette 70. Cette espace permet à la bavette de se déformer sous l'effet de l'écoulement d'air provenant de la turbine ce qui améliorer l'effet d'amortissement.

Du fait de la mise en oeuvre des entretoises 75, qui s'étendent ici selon un axe sensiblement perpendiculaire à l'axe d'avancement du semoir et sensiblement parallèle à la surface du sol S, la direction de l'écoulement d'air est déviée en sorte qu'il a tendance à s'écouler de part et d'autre de la bavette 70 selon des directions essentiellement parallèles aux axes des entretoises 75 illustrées par les flèches sur la figure 9. Les entretoises 75 participent donc à favoriser un écoulement d'air latéralement et non vers l'arrière du semoir.

### 7.4. Avantages

Les moyens d'amortissement et/ou de déviation selon l'invention permettent d'éviter la formation d'un nuage de poussière autour du semoir et notamment d'éviter un déplacement de poussière selon le sens de déplacement du semoir, c'est-à-dire en direction de l'engin utiliser pour le mouvoir sur le sol S.

## Revendications

1. Semoir pneumatique (30) destiné à être solidarisé à un engin agricole, ledit semoir (30) comprenant des moyens de liaison au sol (33), des moyens de stockage d'un produit à semer (38), des moyens de distribution pneumatique dudit produit (39), une turbine (40) comprenant au moins une entrée d'air reliée auxdits moyens de distribution (39) et au moins une évacuation d'air (41), des moyens d'extraction d'air (42) reliés à ladite évacuation, l'extrémité (422) desdits moyens d'extraction d'air (42) débouchant en regard du sol (S),
**caractérisé en ce qu'**il comprend des moyens d'amortissement et/ou de déviation (44, 50, 53) de l'écoulement d'air provenant desdits moyens d'extraction (42), lesdits moyens d'amortissement et/ou de déviation étant placés en aval de l'extrémité (422) desdits moyens d'extraction d'air (42).

2. Semoir selon la revendication 1, **caractérisé en ce que** lesdits moyens d'amortissement et/ou de déviation comprennent une première paroi (441) s'étendant essentiellement parallèlement au sol (S) en aval de ladite extrémité (422).

3. Semoir selon la revendication 1 ou 2, **caractérisé en ce que** lesdits moyens d'amortissement et/ou de déviation comprennent une portion (733) ou une première paroi (441) qui est destinée à reposer au moins en partie sur la surface du sol S.

4. Semoir selon la revendication 2 ou 3, **caractérisé en ce que** lesdits moyens d'amortissement et/ou de déviation (44, 70) ont une section essentiellement en forme de « L », ladite première paroi (441) étant constituée par une des ailes desdits moyens d'amortissement et/ou de déviation (44, 70) ayant une section essentiellement en forme de « L ».

5. Semoir selon la revendication 3 ou les revendications 3 et 4, **caractérisé en ce que** lesdits moyens d'amortissement et/ou de déviation comprennent une bavette (44,70).

6. Semoir selon l'une quelconque des revendications 1 à 5, **caractérisé en ce que** lesdits moyens d'amortissement et/ou de déviation comprennent une bavette (70) ayant une portion inférieure (733) destinée à venir au contact du sol S et une portion supérieure (734), lesdites portions supérieure (734) et inférieure (733) étant distante l'une de l'autre pour définir au moins un espace intérieur creux (74).

7. Semoir selon la revendication 6, **caractérisé en ce que** la bavette (70) comprend une première extrémité (71) qui est solidarisée dans la région de l'extrémité desdits moyens d'extraction d'air (42) du côté orienté vers le sens d'avancement du semoir.

8. Semoir selon la revendication 6 ou 7, **caractérisé en ce que** lesdites portions inférieure (733) et supérieure (734) de la bavette (70) sont maintenues distantes l'une de l'autre au moyen d'au moins une entretoise (75).

9. Semoir selon la revendication 8, **caractérisé en ce que** la ou lesdites entretoises (75) s'étendent selon des axes essentiellement perpendiculaires à l'axe de déplacement du semoir sur ledit sol S et essentiellement parallèlement à la surface du sol S.

10. Semoir selon l'une quelconque des revendications 1 à 9, **caractérisé en ce que** lesdits moyens d'amortissement et/ou de déviation sont au moins en partie réalisés dans un matériau souple.

11. Semoir selon la revendication 10, **caractérisé en ce que** ledit matériau souple appartient au groupe comprenant :
- les élastomères ;
- les mousses ;
- les matériaux tissés ou non tissés.

12. Semoir selon la revendication 1 ou 2, **caractérisé en ce que** lesdits moyens d'amortissement et/ou de déviation comprennent une superposition d'une pluralité de tamis s'étendant essentiellement parallèlement au sol (S) en aval de ladite extrémité (422).

13. Semoir selon la revendication 12, **caractérisé en ce que** le maillage desdits tamis décroit depuis le tamis le plus proche de ladite extrémité jusqu'au tamis le plus proche dudit sol (S).

14. Semoir selon la revendication 12, **caractérisé en ce que** le maillage desdits tamis croit depuis le tamis le plus proche de ladite extrémité jusqu'au tamis le plus proche dudit sol (S).

15. Semoir selon l'une quelconque des revendications 1 à 14, **caractérisé en ce que** l'extrémité desdits moyens d'extraction (42) débouche à une distance D du sol est comprise entre 20 et 30 centimètres.

16. Utilisation d'un dispositif d'amortissement et/ou de déviation pour amortir et/ou dévier l'écoulement d'air provenant des moyens d'extraction (42) d'un semoir pneumatique selon l'une quelconque des revendications 1 à 15, ledit dispositif comprenant des moyens d'amortissement et/ou de déviation de l'écoulement d'air provenant desdits moyens d'extraction (42), lesdits moyens d'amortissement et/ou de déviation étant destinés à être placés en aval de l'extrémité (422) desdits moyens d'extraction d'air (42).

## Patentansprüche

1. Zum Verbinden mit einer Landmaschine ausgebildete pneumatische Sämaschine (30), wobei die Sämaschine (30) Fahrwerksmittel (33), Mittel zum Speichern eines zu säenden Produkts (38), Mittel zum pneumatischen Verteilen des Produkts (39), eine wenigstens einen mit den Verteilungsmitteln (39) verbundenen Lufteinlass und wenigstens einen Luftauslass (41) umfassende Turbine (40), mit dem Auslass verbundene Mittel zum Extrahieren von Luft (42), wobei das Ende (422) der Luftabsaugmittel (42) über dem Boden (S) endet,
**dadurch gekennzeichnet, dass** sie Mittel zum Dämpfen und/oder Ablenken (44, 50, 53) des Luftaustritts von den Mittel zum Extrahieren (42) umfasst, wobei die Mittel zum Dämpfen und/oder Ablenken stromabwärts vom Ende (422) der Mittel zum Extrahieren (42) angeordnet sind.

2. Sämaschine nach Anspruch 1, **dadurch gekennzeichnet, dass** die Mittel zum Dämpfen und/oder Ablenken eine sich im Wesentlichen parallel zum Boden (S) stromabwärts vom Ende (422) erstreckende erste Wand (441) umfassen.

3. Sämaschine nach Anspruch 1 oder 2, **dadurch gekennzeichnet, dass** die Mittel zum Dämpfen und/oder Ablenken einen Teil (733) oder eine erste Wand (441) umfassen, der/die zum Ruhen auf wenigstens einem Teil der Fläche des Bodens S ausgebildet ist.

4. Sämaschine nach Anspruch 2 oder 3, **dadurch gekennzeichnet, dass** die Mittel zum Dämpfen und/oder Ablenken (44, 70) einen Querschnitt im Wesentlichen in L-Form aufweisen, wobei die erste Wand (441) aus einem der Flügel der Mittel zum Dämpfen und/oder Ablenken (44, 70) mit einem Querschnitt im Wesentlichen in L-Form besteht.

5. Sämaschine nach Anspruch 3 oder den Ansprüchen 3 und 4, **dadurch gekennzeichnet, dass** die Mittel zum Dämpfen und/oder Ablenken ein Ablenkblech (44, 70) umfassen.

6. Sämaschine nach einem der Ansprüche 1 bis 5, **dadurch gekennzeichnet, dass** die Mittel zum Dämpfen und/oder Ablenken ein Ablenkblech (70) mit einem zum Kontakt mit dem Boden (S) ausgebildeten unteren Teil (733) und einem oberen Teil (734) umfassen, wobei der obere Teil (734) und der untere Teil (733) einen Abstand zueinander aufweisen, um wenigstens einen hohlen Innenraum (74) zu definieren.

7. Sämaschine nach Anspruch 6, **dadurch gekennzeichnet, dass** das Ablenkblech (70) ein erstes Ende (71) umfasst, das im Bereich des Endes der Mittel zum Extrahieren von Luft (42) der zur Fortbewegungsrichtung ausgerichteten Seite befestigt ist.

8. Sämaschine nach Anspruch 6 oder 7, **dadurch gekennzeichnet, dass** der untere Teil (733) und der obere Teil (734) des Ablenkblechs (70) auf Abstand zueinander mit wenigstens einer Distanz (75) gehalten werden.

9. Sämaschine nach Anspruch 8, **dadurch gekennzeichnet, dass** sich die Distanz(en) (75) entlang der Achsen im Wesentlichen senkrecht zur Achse der Fortbewegung der Sämaschine auf dem Boden (S) und im Wesentlichen parallel zur Oberfläche des Bodens (S) erstreckt/erstrecken.

10. Sämaschine nach einem der Ansprüche 1 bis 9, **dadurch gekennzeichnet, dass** die Mittel zum Dämpfen und/oder Ablenken wenigstens teilweise aus einem flexiblen Material bestehen.

11. Sämaschine nach Anspruch 10, **dadurch gekennzeichnet, dass** das flexiblen Material zur Gruppe gehört umfassend:
- Elastomere;
- Schaumstoffe;
- Gewebe oder Vliesstoffe.

12. Sämaschine nach Anspruch 1 oder 2, **dadurch gekennzeichnet, dass** die Mittel zum Dämpfen und/oder Ablenken eine sich im Wesentlichen parallel zum Boden (S) stromabwärts vom Ende (422) erstreckende Schichtung einer Vielzahl von Sieben umfassen.

13. Sämaschine nach Anspruch 12, **dadurch gekennzeichnet, dass** die Maschenweite der Siebe vom am nächsten zum Ende befindlichen Sieb bis zum am nächsten zum Boden (S) befindlichen Sieb abnimmt.

14. Sämaschine nach Anspruch 12, **dadurch gekennzeichnet, dass** die Maschenweite der Siebe vom am nächsten zum Ende befindlichen Sieb bis zum am nächsten zum Boden (S) befindlichen Sieb zunimmt.

15. Sämaschine nach einem der Ansprüche 1 bis 14, **dadurch gekennzeichnet, dass** das Ende der Absaugmittel (42) in einem Abstand D zum Boden endet, der zwischen 20 und 30 Zentimeter beträgt.

16. Nutzung einer Vorrichtung zum Dämpfen und/oder Ablenken zum Dämpfen und/oder Ablenken des Luftaustritts von den Mittel zum Extrahieren (42) einer pneumatischen Sämaschine nach einem der Ansprüche 1 bis 15, wobei die Vorrichtung Mittel zum Dämpfen und/oder Ablenken des Luftaustritts von den Mittel zum Extrahieren (42) umfasst, wobei die Mittel zum Dämpfen und/oder Ablenken zum Anordnen stromabwärts vom Ende (422) der Mittel zum Extrahieren (42) ausgebildet sind.

## Claims

1. Air seeder (30) intended to be attached to farm machinery, said seeder (30) comprising ground connection means (33), storage means for a product to sow (38), air distribution means for said product (39), a turbine (40) comprising at least an air inlet connected to said distribution means (39) and at least one air exhaust (41), air exhaust means (42) connected to said exhaust, the extremity (422) of said air exhaust means (42) opposite the ground (S),
**characterised in that** it comprises absorbing and/or deflection means (44, 50, 53) for the air outflow stemming from said exhaust means (42), said absorbing and/or deflection means being located downstream of the extremity (422) of said air exhaust means (42).

2. Seeder according to claim 1, **characterised in that** said absorbing and/or deflection means comprise a first wall (441) extending primarily parallel to the ground (S) downstream of said extremity (422).

3. Seeder according to claim 1 or 2, **characterised in that** said absorbing and/or deflection means comprise a portion (733) or a first wall (441) intended to rest at least partially on Ground surface S.

4. Seeder according to claim 2 or 3, **characterised in that** said absorbing and/or deflection means (44, 70) primarily have an L-shaped section, said first wall (441) consisting of one of the wings of said absorbing and/or deflection means (44, 70) having primarily an L-shaped section.

5. Seeder according to claim 3 or claims 3 and 4, **characterised in that** said absorbing and/or deflection means comprise a flap (44, 70).

6. Seeder according to any one of claims 1 to 5, **characterised in that** said absorbing and/or deflection means comprise a flap (70) having a lower portion (733) intended to come into contact with the ground S and an upper portion (734), said upper (734) and lower (733) portions being at a distance from one another to create at least a hollow internal space (74).

7. Seeder according to claim 6, **characterised in that** the flap (70) comprises an extremity (71) that is attached in the region of the extremity of said air exhaust means (42) on the side facing the forward direction of the seeder.

8. Seeder according to claim 6 or 7, **characterised in that** said lower (733) and upper (734) portions of the flap (70) are maintained separate from one another by means of at least one spacer (75).

9. Seeder according to claim 8, **characterised in that** said spacer or spacers (75) extend along axes primarily perpendicular to the displacement axis of the seeder along said ground S and primarily parallel to the ground surface S.

10. Seeder according to any one of claims 1 to 9, **characterised in that** said absorbing and/or deflection means are at least partially made of a flexible material.

11. Seeder according to claim 10, **characterised in that** said flexible material belongs to the group comprising:
- elastomers
- foam
- woven and non-woven materials.

12. Seeder according to claim 1 or 2, **characterised in that** said absorbing and/or deflection means comprise layers of several sieves extending primarily parallel to the ground (S) downstream of said extremity (422).

13. Seeder according to claim 12, **characterised in that** the mesh size of said sieves decreases from the sieve closest to said extremity up to the sieve closest to said ground (S).

14. Seeder according to claim 12, **characterised in that** the mesh size of said sieves increases from the sieve closest to said extremity up to the sieve closest to said ground (S).

15. Seeder according to any one of claims 1 to 14, **characterised in that** the extremity of said exhaust means (42) terminates at a distance D from the ground comprised between 20 and 30 centimetres.

16. Use of an absorbing and/or deflection system to absorb and/or deflect the air flow stemming from the exhaust means (42) of an air seeder according to any one of claims 1 to 15, said system comprising absorbing and/or deflection means for the air flow stemming from said exhaust means (42), said absorbing and/or deflection means being intended to be placed downstream of the extremity (422) of said air exhaust means (42).
